# EUROPEAN PATENT APPLICATION

(11) **EP 1 561 918 A1**
(43) Date of publication of application: **10.08.2005**
(21) Application number: 02785932.1
(22) Date of filing: 11.11.2002
(51) Int. Cl.: F01N 3/02

(54) **ROTARY FILTER TYPE PARTICULATE REMOVING DEVICE**

(71) Applicant: IIZUKA, Takashi, Nakano-ku, Tokyo 164-0014 (JP)
(72) Inventor: IIZUKA, Takashi, Nakano-ku, Tokyo 164-0014 (JP)
(74) Representative: Neugebauer, Jürgen, Dipl.Phys.
(86) International application number: PCT/JP2002/011720
(87) International publication number: WO 2004/044394

(57) **Abstract**

A rotary filter type particulate removing device is provided. A rotary cylinder (2) rotates in a stationary cylinder (1) to change an exhaust gas introduced into the stationary cylinder (1) to a circulating flow so as to apply a centrifugal force on particulates in the exhaust gas in order to collect the particulates circulating in the stationary cylinder (1) into a trap (15) provided at a lower part of the particulate removing device. A filter is located on an inner wall of the rotary cylinder (2) and a huge number of punching holes (8) are formed in the lateral wall of the rotary cylinder. A fan (7) is secured on the rotary cylinder (2) which projects to the outside from the stationary cylinder (1) to constitute a sirocco fan. The exhaust gas passes through the punching holes (8) of the rotary cylinder (2) and flows into the interior of the filter. The exhaust gas further flows towards the sirocco fan. Then, the exhaust gas passes the filter again, and is discharged to the outside through the punching holes (8) of the rotary cylinder (2).

## Description

### Technical Field

The present invention primarily relates to a device attached to an exhaust pipe of a diesel-engine vehicle to remove particulates from an exhaust gas.

### Background Art

One of currently available methods for removing particulates from an exhaust gas of a diesel-engine vehicle includes absorbing the particulates with a filter and superheating the filter when a suitable amount of particulates is absorbed, so as to burn the particulates. The filter is then cleaned for reuse.

Because this conventional method uses the filter to absorb the particulates, it inherently involves cleaning of the filter.

The present invention provides a method of removing particulates without absorbing the particulates with the filter.

### Disclosure of the Invention

A rotary cylinder in a stationary cylinder is rotated by a motor fixed to a head cover of the stationary cylinder. An exhaust gas introduced into the stationary cylinder becomes a circulating gas flow by means of rotating vanes attached to the rotary cylinder. The centrifugal force causes the particulates to flow along an inner wall of the stationary cylinder. A lower part of the stationary cylinder has an opening extending in a longitudinal direction of the cylinder, and the particulates collect into a lower trap via this opening.

A filter is provided along an inner wall of the rotary cylinder.

The rotary cylinder is journally supported by a bearing provided at an end cover of the stationary cylinder. A fan is secured on a projecting portion of the rotary cylinder which extends outwards from the end cover. This fan serves as a sirocco fan. An end cap of the rotary cylinder is removed in order place the filter in contact with the inner wall of the rotary cylinder.

A huge number of punching holes are formed in a wall of the rotary cylinder.

The fan rotates as the rotary cylinder rotates, and the exhaust gas flows through the punching holes of the rotary cylinder to reach the inside of the filter. The exhaust gas further flows toward the sirocco fan and passes through the filter again. The exhaust gas is then discharged to the ambient through the punching holes of the rotary cylinder.

The filter is rotating and the centrifugal force acts on the particulates so that only a weak force acts on the particulates toward the filter. Thus, clogging of the filter hardly occurs. At the same time, it is possible to securely prevent those particulates which have larger sizes than meshing of the filter from flowing into the interior of the filter.

### Brief Description of the Drawings

Figure 1 is a cross-sectional view of a rotary filter type particulate removing device;
Figure 2 is a cross-sectional view taken along the line I-I.
Figure 3 is a cross-sectional view taken along the line J-J.
Figure 4 illustrates a perspective view of a sheet filter.

### Best Mode For Carrying Out the Invention

A rotary cylinder 2 rotates in a center portion of a stationary cylinder 1. The rotary cylinder 2 is journally supported between a head cover 3 and end cover 4 of the stationary cylinder. The rotary cylinder 2 is coupled to a motor 5 fixed on the head cover 3 and rotated by the motor. The rotary cylinder extends beyond the end cover 4 so that it projects outward, and a fan 7 is secured on the projecting part of the rotary cylinder 2. The fan serves as a sirocco fan. An end cap is removably attached to the end of the projection part of the rotary cylinder.

A huge number of punching holes 8 are formed in the entire lateral wall of the rotary cylinder 2. The filter can be placed inside the rotary cylinder from the end cap side. The filter is then disposed along the inner wall of the rotary cylinder.

Inside the stationary cylinder 1, the rotary cylinder 2 has rotary vanes 10 on its outer surface. The rotary vanes 10 are fixed to the rotary cylinder and rotate together. An exhaust pipe 12 which admits an exhaust gas 11 of a vehicle has an end 13 which opens in a center area of the cylinder between the rotary vanes 10 and head cover 3.

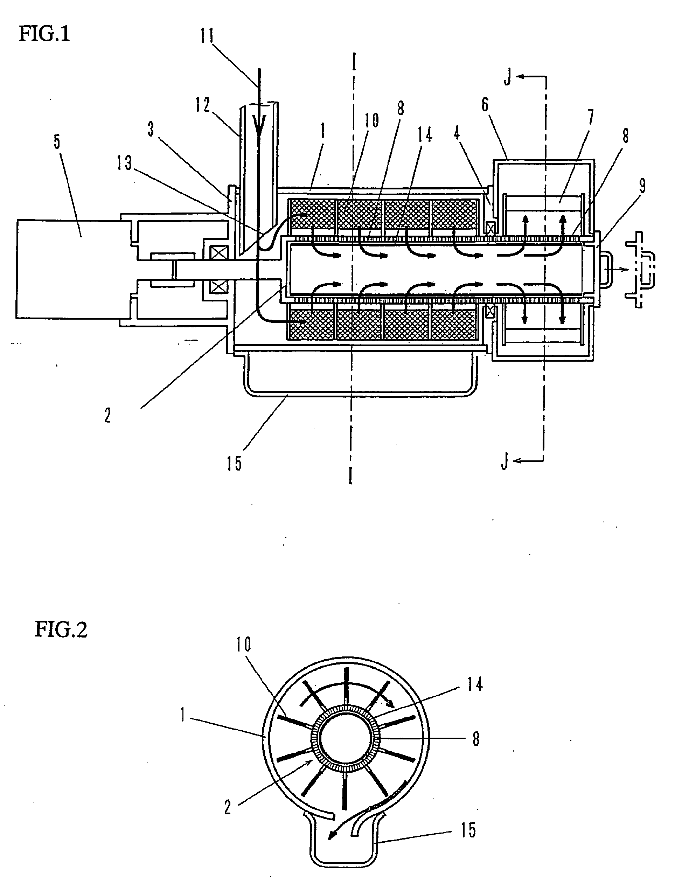

As illustrated in Figure 2, the rotary vanes 10 changes the exhaust gas to the circulating flow. The particulates in the exhaust gas circulate along the inner wall of the stationary cylinder due to the centrifugal force, and are collected into a trap 15 via an opening formed in a lower portion of the stationary cylinder.

In order to make the exhaust gas substantially steady circulating flow, the rotary vanes 10 may have a certain device such as wire gauze, punching plates, brushes and other light-weight devices to restrict a turbulent flow which bounds against the inner wall of the cylinder.

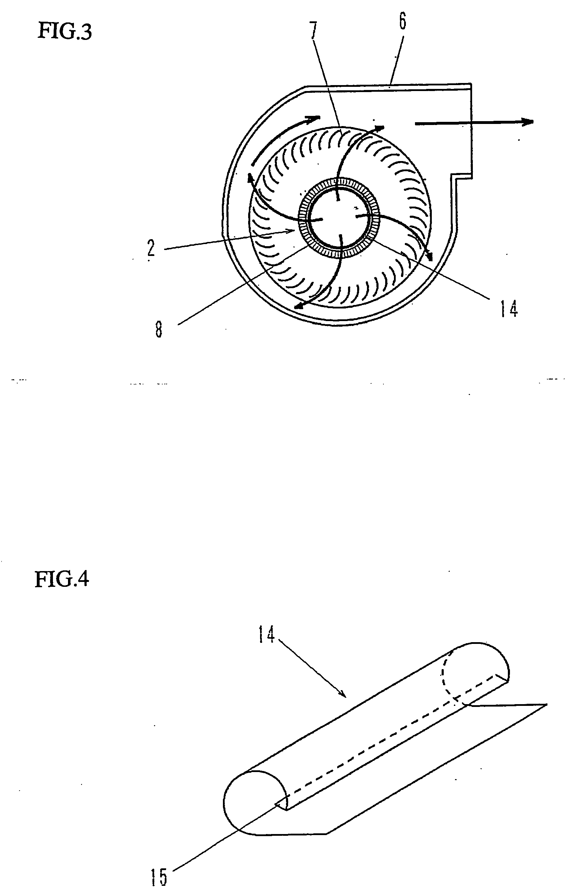

Referring to Figure 3, the fan 7 rotating together with the rotary cylinder discharges the gas from the rotary cylinder to the ambient. The fan is housed by a cover 6 so that it constitutes a sirocco fan.

The filter of this particulate removing device is designed not to absorb the particulates. Therefore, the filter can have a very thin shape. Accordingly, as shown in Figure 4, the present invention can use a thin sheet filter 14, which is rolled and placed in the rotary cylinder. In order for the filter to be rolled and placed in the rotary cylinder in tight contact the inner wall of the cylinder, the filter may have elasticity. Alternatively, a plurality of punching sheets made from thin stainless may be placed in an overlapped manner in the rotary cylinder.

When the filter should be removed, a flap 15 is made at the edge of the filter. The flap 15 is pinched, and pulled while twisting the filter. By doing so, the diameter of the rolled filter becomes smaller and this facilitates the pulling out of the filter.

It should be noted that the mesh size of the filter at the filter entrance may be different from that at the filter exit. Also, a catalyst may be provided in the rolled filter.

### Industrial Applicability

The present invention provides an inexpensive, long-lasting, exhaust-gas purification device with an enhanced capability with respect to particulate removal because it can use a very thin and light-weight filter and the filter hardly suffers from clogging.

## Claims

1. A rotary filter type particulate removing apparatus **characterized by** the following structure:
A rotary cylinder (2) in a stationary cylinder (1) is coupled to a motor (5) fixed to a head cover (3) of the stationary cylinder, and is journally supported between the head cover (3) and an end cover (4) of the stationary cylinder (1) such that the rotary cylinder can rotate. An exhaust pipe (12) extends in a center portion of the stationary cylinder (1) between the rotary cylinder (2) and head cover (3). A lower part of the stationary cylinder has an opening in a projecting part of the cylinder, and a trap is attached to cover the opening.
A huge number of punching holes are provided in the entire lateral wall of the rotary cylinder, and a filter is located in contact with an inner wall of the rotary cylinder.
The rotary cylinder extends beyond the end cover and projects outward, a fan is secured on a projecting part of the rotary cylinder, and a cover houses the fan to form a sirocco fan.

2. A method of providing the filter, comprising rolling a thin sheet filter, inserting the rolled filter in a rotary cylinder and bringing the rolled filter into tight contact with an inner wall of the cylinder.
